# EUROPÄISCHE PATENTSCHRIFT

(11) **EP 3 943 325 B1**
(45) Veröffentlichungstag und Bekanntmachung des Hinweises auf die Patenterteilung: **06.09.2023**
(21) Anmeldenummer: 21185718.0
(22) Anmeldetag: 15.07.2021
(51) Int. Cl.: B60J 7/06

(54) **SCHIEBEVERDECK FÜR EINE DACHÖFFNUNG EINES NUTZFAHRZEUG-LADERAUMS**
SLIDING COVER FOR A ROOF OPENING OF A COMMERCIAL VEHICLE CARGO AREA
BÂCHE COULISSANTE POUR UNE OUVERTURE DE TOIT D'UNE ZONE DE CHARGEMENT DE VÉHICULE UTILITAIRE

(30) Priorität: 23.07.2020 DE 102020119447
(43) Veröffentlichungstag der Anmeldung: 26.01.2022
(73) Patentinhaber: F. Hesterberg & Söhne GmbH & Co. KG, 58256 Ennepetal (DE)
(72) Erfinder: Tiedtke, Henning, 58256 Ennepetal (DE)
(74) Vertreter: Janke Scholl Patentanwälte PartG mbB

(56) Entgegenhaltungen:
- EP-A1- 1 205 323
- EP-A1- 2 106 947
- DE-A1- 3 418 060
- US-A- 3 820 840
- US-A- 4 547 014

## Beschreibung

Die Erfindung betrifft ein Schiebeverdeck für eine Dachöffnung eines Nutzfahrzeug- Laderaums, mit Längsführungen zu beiden Seiten der Dachöffnung, mit Querspriegeln, die sich zwischen den Längsführungen erstrecken und an ihren Enden jeweils mit einem längsverschieblich an der jeweiligen Längsführung gelagerten Schlitten versehen sind, und mit zwischen aufeinanderfolgenden Schlitten paarweise angeordneten Hubbügeln, wobei die beiden Hubbügel jedes Paars gegeneinander aufstellbar sind und hierzu an ihrem einen Ende schwenkbeweglich mit dem jeweiligen Schlitten, und an ihrem anderen, hubseitigen Ende in einer Gelenkverbindung miteinander verbunden sind, wobei sich ein Federelement mit einem ersten Federende unter Ausübung einer nach unten gerichteten Kraft an dem hubseitigen Ende des ersten Hubbügels des Paars, und mit einem zweiten Federende unter Ausübung einer nach unten gerichteten Kraft an dem hubseitigen Ende des zweiten Hubbügels des Paars abstützt.

Derartige Schiebeverdecke werden bei Nutzfahrzeugen und Nutzfahrzeuganhängern eingesetzt, um ein Be- und Entladen des Laderaums auch von oben her zu ermöglichen. Bestandteil des Schiebeverdecks sind im Dachbereich entlang der Fahrzeuglängsseiten angeordnete Längsholme, die die Dachaußenkanten des Nutzfahrzeugaufbaus bilden. Auf den Längsholmen sind mehrere längsverschiebliche Querspriegel angeordnet, auf denen eine wasserdichte Plane aufliegt. Zum Öffnen des Dachs werden die Querspriegel zusammengeschoben, was relativ große Betätigungskräfte erfordert, da sich bei dem Zusammenschieben paarweise angeordnete Hubbügel gegeneinander aufstellen dabei Längsabschnitte der Plane anheben und zugleich falten. Solche Schiebeverdecke sind z. B. aus der DE 195 44 619 A1 und der EP 0 778 169 B1 bekannt.

Eine weitere ist aus der EP 1 844 968 A1 bekannt. Auch hier sind die Dachholme zu beiden Seiten der Dachöffnung des Fahrzeugs mit Längsführungen versehen, an denen Schlitten längsverschieblich abgestützt sind. Zwischen in Längsrichtung aufeinanderfolgenden Schlitten sind Hubbügel paarweise angeordnet, wobei die zwei Hubbügel jedes Paares gegeneinander aufstellbar sind und die Hubbügel hierzu an ihrem einen Ende schwenkbeweglich mit dem jeweiligen Schlitten, und an ihrem anderem Ende in einer Gelenkverbindung miteinander verbunden sind. Durch eine besondere Ausgestaltung des die Hubbügel verbindenden Gelenks wird erreicht, dass beim Zusammenschieben der Querspriegel in Folge der dabei aufgewendeten Kräfte die Hubbügel sich gegeneinander aufstellen.

Eine andere Möglichkeit, ein selbsttätiges Aufstellen der Hubbügel beim Zusammenschieben der Querspriegel zu erreichen, ist in der DE 10 2014 203 693 A1 beschrieben. Die zwei Hubbügel sind hierbei jeweils mehrgliedrig, bzw. raupenartig gestaltet. Nachteilig hieran ist, dass in jedem Hubbügel noch zusätzliche Gelenke vorhanden sein müssen, was zu einem erheblichen baulichen Aufwand führt, ohne dass deshalb die in Längsrichtung aufzubringenden Betragskräfte geringer wären.

Die DE 34 18 060 A1 offenbart ein gattungsgemäßes Schiebeverdeck mit Längsführungen zu beiden Seiten einer zu öffnenden Dachöffnung. Querspriegel erstrecken sich zwischen den Führungen und sind an ihren Enden mit in den Führungen längsbeweglichen Rollenwagen versehen. Zwischen aufeinanderfolgenden Rollenwagen sind paarweise Hubbügel angeordnet, wobei die beiden Hubbügel jedes Paars gegeneinander aufstellbar sind und sie hierzu mit ihrem einen Ende schwenkbeweglich an dem jeweiligen Rollenwagen gelagert sind und sie an ihrem anderen, hubseitigen Ende in einem gemeinsamen Gelenk verbunden sind. Ebenfalls an diesem hubseitigen Ende befindet sich ein das Gelenk umschlingendes Federelement, welches sich mit einem ersten Federende an dem einen, und mit einem zweiten Federende an dem anderen Hubbügel abstützt. Die ausgeübte Federkraft ist dergestalt, dass sich beim Schließen bzw. Absenken des Schiebeverdecks die Vorspannung in dem Federelement erhöht.

Der Erfindung liegt die **Aufgabe** zugrunde, ein Schiebeverdeck aus in Längsrichtung zusammenschiebbaren Dachelementen zu schaffen, welches aus einfachen, preiswert herstellbaren Einzelteilen besteht und welches zu seinem Öffnen nur geringe Betätigungskräfte in Längsrichtung benötigt.

Zur **Lösung** der Aufgabe wird ein Schiebeverdeck mit den Merkmalen des Anspruchs 1 vorgeschlagen.

Mit der erfindungsgemäßen Vorrichtung wird ein in seiner Handhabung optimiertes und trotzdem in der Konstruktion vereinfachtes Schiebeverdeck ermöglicht. Die an den Hubbügeln abgestützten, unter Vorspannung stehenden Federelemente sorgen dafür, dass ein Zusammenschieben der Querspriegel vom geschlossenen in den offenen Zustand erleichtert wird. Mithin sorgen die vorgespannten Federelemente dafür, dass die im geschlossenen Zustand des Nutzfahrzeug-Laderaums in horizontaler Ebene zueinander liegenden Hubbügel eine Hubkraft von ihrer Auflagefläche weg erfahren. Dies birgt den weiteren Vorteil, dass sich die horizontal zueinander ausgerichteten Hubbügel bei einem Öffnungsvorgang selbstständig in eine aufrechte Position, also von den Längsholem abgewandt, aufstellen.

Bestandteile jedes der beiden Hubbügel sind zwei Schenkelabschnitte und ein Quersteg, wobei der Quersteg die zwei Schenkelabschnitte im Bereich der Gelenkverbindung verbindet. Beispielsweise können die zwei Schenkelabschnitte parallel zueinander ausgebildet sein, wobei sie über einen rechtwinkelig zu den zwei Schenkelabschnitten ausgebildeten Quersteg miteinander verbunden sind.

Vorzugsweise bestehen die Schenkelabschnitte gemeinsam mit dem Quersteg jedes Hubbügels aus einem mehrfach geknickten Metalldraht. In herstellungstechnisch günstiger Weise sind der Quersteg und die zwei Schenkelabschnitte eines Hubbügels einteilig, so dass lediglich Umformprozesse in Form von Biegen zur Herstellung des Hubbügels notwendig sind. Folglich wird für die Herstellung eines Bügels ausschließlich ein entsprechend bemessener Metalldraht benötigt.

Der Metalldraht ist z. B. von einem runden Querschnitt und weist einen Durchmesser zwischen 3 mm und 10 mm auf, wobei auch andere Querschnittsprofile gewählt werden können. Der Biegeprozess wird als Kaltbiegeprozess durchgeführt, sodass die Biegekanten des Metalldrahtes nach dem Umformprozess eine erhöhte Festigkeit aufweisen. Ferner sind auch andere Verfahrensschritte denkbar.

Bevorzugt sind die Schenkelabschnitte an ihren dem Quersteg abgewandten Enden schwenkbeweglich mit dem jeweiligen Schlitten verbunden, z. B. indem die Schenkelabschnitte an den vom Quersteg abgewandten Enden nach außen hin weisende Laschen oder Zapfen umfassen. Diese sind in Bohrungen am ersten Ende eines Schlittens drehbeweglich gelagert, wobei an dem zweiten Ende des Schlittens die Laschen eines weiteren, entgegengesetzt ausgerichteten Hubbügels drehbeweglich gelagert sind. Die Laschen sind einteilig mit dem Quersteg und den Schenkelabschnitten, und ebenfalls durch Umformen des Metalldrahtes gebildet.

Parallel zum Quersteg des ersten Hubbügels ist der Quersteg eines zweiten Hubbügels angeordnet, wobei die beiden Querstege gemeinsam eine Gelenkachse bilden, die als Faltachse der beiden Hubbügel des Bügelpaars zueinander dient.

Die Querstege beider Hubbügel sitzen gemeinsam in einem Verbindungselement, welches sich auf der Gelenkachse erstreckt.

Vorzugsweise sitzen die Querstege jeweils in einer Längsnut des Verbindungselements, wobei sich die beiden Längsnuten auf einander abgewandten Umfangsabschnitten des Verbindungselements befinden. Die Längsnuten des Verbindungselements sind so ausgebildet, dass sie eine teilweise drehbewegliche Lagerung der Querstege ermöglichen, um ein Verschwenken der beiden Hubbügel zueinander zu ermöglichen.

Vorzugsweise beträgt in Richtung der Gelenkachse die Länge des Verbindungselements mehr als 2/3 der Länge der Querstege, wobei bevorzugt das Verbindungselement im Wesentlichen als Kreiszylinder gestaltet ist. Somit sind die Querstege in den Nuten gelagert, wobei (weiter mit Seite 4 der Beschreibung) die Querstege beidseitig an den Enden des zylinderförmigen Verbindungselements hinausragen und so die Schenkelabschnitte nicht durch die Verbindungselemente in ihrer Drehbewegung begrenzt sind.

Vorzugsweise sind an den Federenden Haken ausgebildet, die an dem jeweiligen Hubbügel eingehängt sind, wobei sich das erste Federende des Federelements gegen einen der Schenkelabschnitte des ersten Hubbügels, und sich das zweite Federende des Federelements gegen einen der Schenkelabschnitte des zweiten Hubbügels abstützt.

Die Federenden verlaufen z. B. zunächst parallel zu den Schenkelabschnitten, wobei sie an ihrem vom Quersteg abgewandten Ende einen Knick aufweisen und sich hin zu den Schenkelabschnitten erstrecken und diese mit dem Haken umschließen.

Die Haken sind so ausgebildet, dass ihre scharfen Enden, die eine Gefahr für eine Dachplane darstellen könnte, nach unten gerichtet sind, um das potentielle Risiko einer Beschädigung der Dachplane zu vermeiden, wobei an dem dem Quersteg zugewandten Ende der Federenden bevorzugt ein zwischen den Federenden angeordneter Mittelabschnitt des Federelements um eine Gelenkachse der Gelenkverbindung führt. Die Gelenkachse verläuft streng geometrisch betrachtet axial im Querschnittsmittelpunkt des in der Längsnut gelagerten Querstegs. Im Folgenden wird die Gelenkachse jedoch näherungsweise axial zum Querschnittsmittelpunkt des Verbindungselements angenommen.

Vorzugsweise führt der zwischen den Federenden angeordnete Mittelabschnitt des Federelements um das Verbindungselement sowie um die darin sitzenden Querstege herum. Bevorzugt führt der Mittelabschnitt in Schraubenform um die Gelenkachse herum bzw. vorzugsweise führt der Mittelabschnitt in Schraubenform um das Verbindungselement sowie um die darin sitzenden Querstege herum. Der Mittelabschnitt stellt den federelastischen Bestandteil des Federelements dar, wobei der Mittelabschnitt dazu eingerichtet ist, ein Herausfallen der Querstege aus dem Verbindungselement zu verhindern. Ferner dient die Außenseite des Verbindungselements als Abstützfläche für den Mittelabschnitt des Federelements.

Um den Bewegungsradius der Schenkelabschnitte nicht zu beeinträchtigen, äquivalent zu der Ausbildung des Verbindungselements, beträgt in Richtung der Gelenkachse die Länge des Mittelabschnitts mehr als 2/3 der Länge der Querstege. Jedoch unterschreitet die Länge des Mittelabschnitts die des Verbindungselements.

Der Mittelabschnitt ist koaxial zur Gelenkachse ausgerichtet, wobei sich an den zwei Enden des Mittelabschnitt jeweils ein Federende orthogonal von dem Mittelabschnitt nach außen hin erstreckt. Dabei weisen beide Federenden in jeweils entgegengesetzte Richtungen, wobei die am Mittelabschnitt ausgebildeten Federenden sowie die wiederum daran ausgebildeten Haken nicht unmittelbar gegenüber voneinander in einer Ebene ausgebildet sind. Ausgehend von der Gelenkachse als zentraler Achse weisen die Federenden einen Winkel zueinander auf, der auf der ein Seite größeren als 180 ° und auf der anderen Seite kleiner 180° ist. Bevorzugt beträgt der kleine Winkel maximal 120 °, wobei vorzugsweise der kleine Winkel minimal 90 ° beträgt.

Folglich ergibt sich im federentlasteten Zustand aus der unsymmetrischen Anordnung der Federenden des Federelements mit den in dem Verbindungselement arretierten Hubbügeln eine Art Satteldachform. Mit anderen Worten weiten sich die Hubbügel im installierten Zustand und mit unbelastetem Federelement, ausgehend vom Verbindungselement hin zu den Längsführungen, konvergierend aus, wobei die vom Verbindungselement abgewandten Enden mit den Laschen oder Zapfen in dem Schlitten gelagert sind.

Um die Hubbügel in eine parallele Position zu den Längsführungen, also das Schiebeverdeck in seine geschlossene Position zu bringen, muss bei dem Verschieben der Schlitten sowohl gegen die Reibungskraft als auch gegen die in den Federelementen gespeicherte Federkraft gewirkt werden. Andererseits unterstützen die im geschlossenen Zustand vorgespannten Federelemente ein Öffnen des Schiebeverdecks, also der Verschiebung der Schlitten und der damit einhergehenden Überführung der Hubbügel von einer horizontalen Ausrichtung in die zueinander aufgestellte Ausrichtung. Die vorgespannten Federelemente begünstigen sowohl ein Verschieben der Schlitten zueinander, als auch wirken sie entgegen der Schwerkraft, so dass das Anheben und das Falten der Dachplane unterstützt wird.

Vorzugsweise ist eine durch die Querspiegel, die Schlitten und die Hubbügel gestützte Dachplane an den Schlitten und an den Federelementen fixiert, wobei bevorzugt an der Dachplane zu deren Fixierung an dem jeweiligen Federelement eine Klammer befestigt ist, die federelastisch auf das Federelement aufgeclipst ist. Die Klammern sind dazu eingerichtet, die Dachplane im Bereich der Hubbügel auf diesen zu sichern und ein Verrutschen der Dachplane in Querrichtung und eine damit einhergehende Einwölbung zu vermeiden. Alternativ sind weitere Klammern auch bzw. oder dazu ausgebildet, an den fahrzeugaußenseitigen Schenkelabschnitten der Hubbügel aufgeclipst zu werden.

Um die strukturelle Integrität des einteiligen Hubbügels zu erhöhen, sind verstärkende Platten oder Elemente an den Schenkelabschnitten der Hubbügel ausgebildet. Die seitlichen Enden der Platten sind ebenfalls mit Klammern versehen, wobei die Klammern auf den gegenüberliegenden Schenkelabschnitten eines Hubbügels aufgeclipst werden. Alternativ sind auch andere Festlegungen möglich. Des Weiteren können die Platten oder Elemente auch Aufnahmen aufweisen, an denen die Dachplane befestigt werden kann.

Die Erfindung bietet den Vorteil, dass alle Komponenten fertigungstechnisch anspruchslos in ihrer Herstellung sind und zudem keine schwierigen form-, reib oder stoffschlüssigen Verfahrensschritte notwendig sind, um die Komponenten zu dem Schiebeverdeck zusammen zu fügen. Somit ist auch die Montage mit wenigen Arbeitsschritten und damit zeitsparend zu bewerkstelligen.

Weitere die Erfindung verbessernde Maßnahmen werden nachstehend gemeinsam mit der Beschreibung eines bevorzugten Ausführungsbeispiels anhand der Figuren näher erläutert. Dabei zeigt:
- Fig. 1: in perspektivischer Darstellung einen Nutzfahrzeugaufbau mit einer erfindungsgemäßen Schiebeabdeckung;
- Fig. 2a: eine perspektivische Ansicht des Schiebeverdecks ohne dessen Dachplane, im teilweise geöffneten Zustand;
- Fig. 2b: eine perspektivische Ansicht des Schiebeverdecks ohne dessen Dachplane, im geschlossenen Zustand;
- Fig. 3: in Explosionsansicht Teile des Schiebeverdecks ohne Dachplane;
- Fig. 4: eine schematische Seitenansicht des Schiebeverdecks zur Darstellung der Fixierung der Dachplane mittels einer Klammer an dem Federelement.

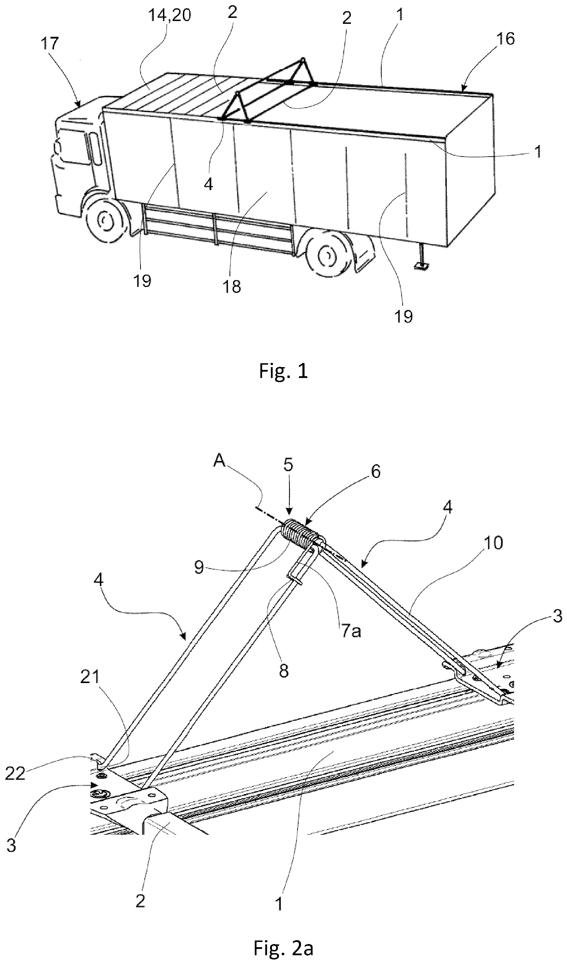

Die Fig. 1 gibt einen Nutzfahrzeugaufbau in Form eines Planenaufbaus eines Sattelanhängers 16 wieder. Der Nutzfahrzeugaufbau ist also Bestandteil eines sogenannten Sattelaufliegers, der von einem Zugfahrzeug 17 gezogen wird. Dargestellt ist ein sogenannter Curtainsider-, bzw. Tautliner-Aufbau, bei dem die Seitenplanen 18 mitsamt den Rungen 19 nach vorne oder hinten verschoben werden können, um große Seitenöffnungen zu schaffen. Die Rungen 19 verbinden den Boden mit Längsführungen 1 beidseits des Dachs 20 des Nutzfahrzeugaufbaus. Die Konstruktion aus den in Fahrzeuglängsrichtung verlaufenden linken und rechten Längsführungen 1 und den Rungen 19 hält die Seitenplanen 18 und bildet zusammen mit dem Boden die tragende Struktur.

In Bezug auf die Fahrzeugmitte sind die beiden Längsführungen 1 symmetrisch angeordnet und gestaltet. An ihnen sind die Elemente des Dachs 20 befestigt. Das Dach 20 ist nicht starr, sondern besteht aus verschiebbaren Elementen und einer darauf auffaltbaren Dachplane 14. Die verschiebbaren Elemente und die Dachplane 14 lassen sich zum Öffnen des Dachs 20 nach vorne zusammenschieben bzw. falten, um so eine Dachöffnung zu schaffen, die das Be- und Entladen des Nutzfahrzeug-Laderaums von oben her ermöglicht.

Die Dachplane 14 ist sowohl an den Querspriegeln 2, die sich nach Art von Traversen zwischen dem linken Längsholm 1 und dem rechten Längsholm 1 erstrecken, als auch im Bereich der Hubbügel 4 fixiert. Über die Länge des Dachs 20 sind eine Mehrzahl solcher Querspriegel 2 vorhanden, wobei die Enden der Querspriegel 2 mittels Schlitten 3 an bzw. in den Längsführungen 1 in Fahrzeuglängsrichtung verschiebbar geführt sind.

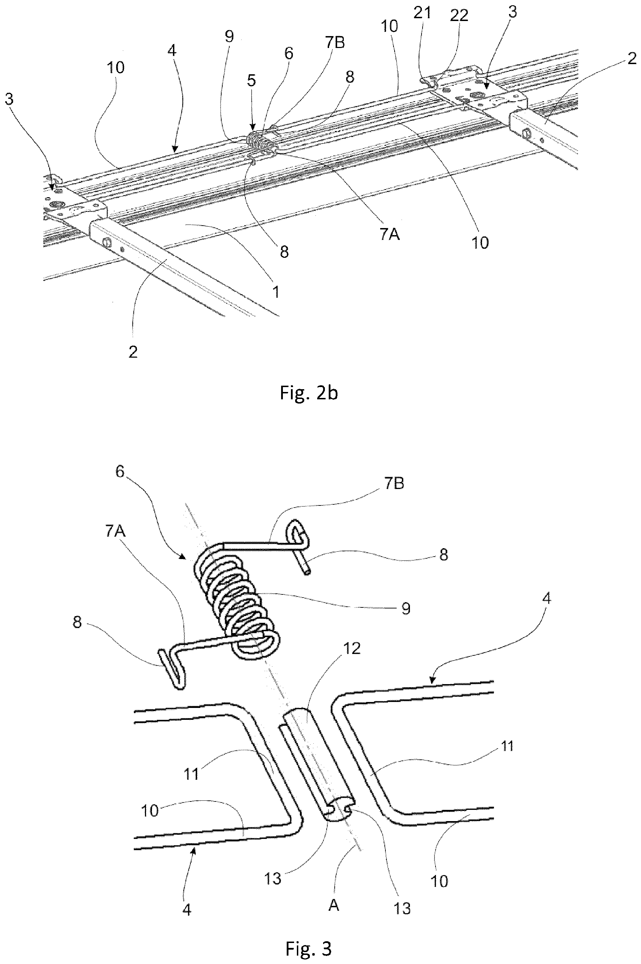

Die Figuren 2a und 2b zeigen einen perspektivischen Ausschnitt des Schiebeverdecks ohne Dachplane 14 auf einer Längsführungen 1 der Dachöffnung. Orthogonal zu den Längsführung 1 ist mit einem Ende ein Querspriegeln 2 angeordent, welcher sich zwischen der dargestellten Längsführung 1 und einer nicht dargestellten, gegenüberliegenden Längsführung erstreckt. Der Quersprigel 2 ist an seinen Enden jeweils mit einem längsverschieblich an der jeweiligen Längsführungen 1 gelagerten Schlitten 3 versehen, wobei zwischen aufeinanderfolgenden Schlitten 3 paarweise Hubbügel 4 angeordneten sind.

Die beiden Hubbügel 4 eines jeden Paars sind gegeneinander aufstellbar und hierzu an ihren Enden durch Laschen 21 oder Zapfen, die in komplementären Bohrungen 22 in den Schlitten 3 angeordnet sind, schwenkbeweglich in dem jeweiligen Schlitten 3 gelagert. Das andere Ende ist mit seinem hubseitigen Ende in einer Gelenkverbindung 5 mit einem weiteren hubseitigen Ende des anderen Hubbügels 4 verbunden.

Um die Gelenkverbindung 5 erstreckt sich ein Federelement 6, welches sich mit einem ersten Federende 7A unter Ausübung einer nach unten gerichteten Kraft an dem hubseitigen Ende des ersten Hubbügels 4 des Paars, und mit einem zweiten Federende 7B unter Ausübung einer nach unten gerichteten Kraft an dem hubseitigen Ende des zweiten Hubbügels 4 des Paars abstützt. Die Kraftübertragung findet an den Federenden 7A, 7B statt, wobei an den Federenden 7A, 7B jeweils Haken 8 ausgebildet sind, die in den jeweiligen Hubbügel 4 eingehängt sind. Zwischen den Federenden 7A, 7B ist ein Mittelabschnitt 9 des Federelements 6 angeordnet, welcher als Schraubenfeder, bzw. in einer Helix um die Gelenkachse A der Gelenkverbindung 5 führt.

Der Gelenkabschnitt 5 besteht aus zwei gegenüberliegenden Hubbügeln 4, die in einem gemeinsamen Verbindungselement 12 gelagert sind. Bestandteile der beiden Hubbügel 4 sind jeweils zwei Schenkelabschnitte 10 und ein Quersteg 11. Der Quersteg 11 besteht gemeinsam mit den beiden Schenkelabschnitten 10 und den an die Schenkelabschnitte 10 anschließenden Haken 8 aus einem mehrfach geknickten Metalldraht.

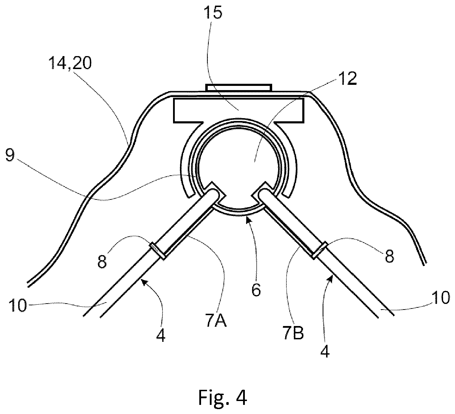

Der Quersteg 11 ist dazu ausgebildet, die Schenkelabschnitte 10 im Bereich der Gelenkverbindung 5 zu verbinden, wobei die Querstege 11 beider Hubbügel 4 des Bügelpaars parallel zueinander in dem Verbindungselement 12 gelagert sind, welches sich in Stabform auf der Gelenkachse A erstreckt. Die Querstege 11 sitzen gemäß Figur 4 jeweils in einer Längsnut 13 des Verbindungselements 12, wobei sich die beiden Längsnuten 13 auf einander abgewandten Umfangsabschnitten des Verbindungselements 12 befinden.

Die Schenkelabschnitte 10 sind an ihren dem Quersteg 11 abgewandten Enden schwenkbeweglich mit dem jeweiligen Schlitten 3 verbunden, wobei sich das erste Federende 7A gegen einen der Schenkelabschnitte 10 des ersten Hubbügels 4, und das zweite Federende 7B gegen einen der Schenkelabschnitte 10 des zweiten Hubbügels 4 abstützt.

Figur 2a zeigt ein teilweise geöffnetes Schiebeverdeck, in dem die Hubbügel 4 des Paars statteldachförmig zueinander aufgestellt sind, bzw. die Gelenkverbindung 5 von der Längsführung 1 abgewandt aufgestellt ist. Diese Position zeigt den Zustand, in dem das Federelement 6 keine Spannung aufweist, bzw. unverformt an den Hubbügeln 4 anliegt. Soll das Dach 20 maximal weit geöffnet werden, also die Hubbügel 4 in eine maximal aufrechte Position gebracht werden, wird das Federelement 6 verformt, sodass zusätzlich zur Reibungskraft auch gegen die Federkraft des Federelements, allerdings diesmal in entgegengesetzter Richtung, gearbeitet werden muss.

Dies erfordert zwar einen höheren Energieaufwand vom Benutzer, erleichtert jedoch in der Anfangsphase darauf den Schließprozess.

Gemäß Figur 2b ist das Schiebeverdeck geschlossen, sodass beide Hubbügel 4 horizontal zueinander auf der Längsführung 1 aufliegen, bzw. parallel zu dieser verlaufen. In dem Federelement 6 ist durch die Verformung potentielle Energie gespeichert, die bei einem Öffnungsvorgang freigesetzt wird und die die Gelenkverbindung 5 sowie die Hubbügel 4 von der Längsführung 1 aufstellt.

Folglich kann durch die in den Federelementen 6 gespeicherte Energie von einer Art Starthilfe gesprochen werden, die sowohl das Öffnen, als auch das Schließen des Schiebeverdecks in der Anfangsphase unterstützt und die aufzubringende Startenergie reduziert.

Figur 3 zeig eine Explosionsansicht ohne Dachplane 14, wobei zu erkennen ist, dass der Mittelabschnitt 9 und das Verbindungselements 12 in Richtung der Gelenkachse A mehr als 2/3 der Länge der Querstege 11 aufweisen. Die Querstege 11 sind dazu ausgebildet, jeweils in einer Längsnut 13 des Verbindungselements 12 drehbar gelagert zu sein, wobei sich die beiden Längsnuten 13 auf einander abgewandten Umfangsabschnitten des Verbindungselements 12 befinden. Die Längen des Mittelabschnitts 9 und des Verbindungselements 12 sind maximal so groß zu wählen, dass sie keinen Kontakt zu den vom Quersteg 11 orthogonal abknickenden Schenkelabschnitten 10 aufweisen, damit sich die Schenkelabschnitte 10 über die in der Längsnut 13 drehbar gelagerten Querstege 11 verschwenken können.

Figur 4 offenbart eine schematische Seitenansicht des Schiebeverdecks zur Darstellung der Fixierung der Dachplane mittels einer Klammer 15 an den Federelement 6. Dargestellt sind zwei Hubbügel 4, die an ihren hubseitigen Enden, bzw. mit ihren Querstegen 11, in den Längsnuten 13 angeordnet und vom Mittelabschnitt 9 des Federelements 6 umschlossen sind. Die vom Mittelabschnitt 9 abgehenden Federenden 7A, 7B sind einerseits an dem einen, als auch an dem anderen Schenkelabschnitt 10 der beiden Hubbügel 4 festgelegt. Über der gesamten Vorrichtung ist ein schematischer Querschnitt einer Dachplane 14 dargestellt. Die Dachplane 14 ist auf Ihrer Unterseite mit einer Klammer 15 versehen, die sich mit Ihrem Öffnungsquerschnitt in Richtung der Gelenkachse A erstreckt. Die Dachplane 14 ist durch die Klammer 15 auf dem Mittelabschnitt 9 des Federelements 6 aufgeclipst, sodass ein seitliches Abrutschen der Dachplane 14 vom Bereich der Gelenkverbindung 5 verhindert wird. Die Klammer 15 kann sowohl auf der Innenseite der Dachplane 14 verklebt, als auch durch eine Verschraubung oder Vernietung angebunden sein. Ferner kann die Klammer 15 auch auf die Dachplane 14 aufgenäht sein.

### Bezugszeichenliste

- 1: Längsführungen
- 2: Querspriegel
- 3: Schlitten
- 4: Hubbügel
- 5: Gelenkverbindung
- 6: Federelement
- 7A: Federende
- 7B: Federende
- 8: Haken
- 9: Mittelabschnitt
- 10: Schenkelabschnitt
- 11: Quersteg
- 12: Verbindungselement
- 13: Längsnut
- 14: Dachplane
- 15: Klammer
- 16: Sattelanhänger
- 17: Zugfahrzeug
- 18: Seitenplanen
- 19: Runge
- 20: Dach
- 21: Lasche
- 22: Bohrung

- A: Gelenkachse

## Patentansprüche

1. Schiebeverdeck für eine Dachöffnung eines Nutzfahrzeug-Laderaums, mit Längsführungen (1) zu beiden Seiten der Dachöffnung, mit Querspriegeln (2), welche sich zwischen den Längsführungen erstrecken und an ihren Enden jeweils mit einem längsverschieblich an der jeweiligen Längsführung (1) gelagerten Schlitten (3) versehen sind, und mit zwischen aufeinanderfolgenden Schlitten (3) paarweise angeordneten Hubbügeln (4), wobei die beiden Hubbügel (4) jedes Paars gegeneinander aufstellbar sind und hierzu an ihrem einen Ende schwenkbeweglich mit dem jeweiligen Schlitten (3), und an ihrem anderen, hubseitigen Ende in einer Gelenkverbindung (5) miteinander verbunden sind, wobei sich ein Federelement (6) mit einem ersten Federende (7A) unter Ausübung einer nach unten gerichteten Kraft an dem hubseitigen Ende des ersten Hubbügels (4) des Paars, und mit einem zweiten Federende (7B) unter Ausübung einer nach unten gerichteten Kraft an dem hubseitigen Ende des zweiten Hubbügels (4) des Paars abstützt, **dadurch gekennzeichnet, dass** Bestandteile jedes der beiden Hubbügel (4) zwei Schenkelabschnitte (10) und ein Quersteg (11) sind, wobei der Quersteg (11) die Schenkelabschnitte (10) im Bereich der Gelenkverbindung (5) verbindet, und dass die Querstege (11) beider Hubbügel (4) gemeinsam in einem Verbindungselement (12) sitzen, welches sich auf der Gelenkachse (A) erstreckt.

2. Schiebeverdeck nach Anspruch 1, **dadurch gekennzeichnet, dass** die Federenden (7A, 7B) als Haken (8) ausgebildet sind, die in den jeweiligen Hubbügel (4) eingehängt sind.

3. Schiebeverdeck nach Anspruch 1 oder 2, **dadurch gekennzeichnet, dass** ein zwischen den Federenden (7A, 7B) angeordneter Mittelabschnitt (9) des Federelements (6) um eine Gelenkachse (A) der Gelenkverbindung (5) führt.

4. Schiebeverdeck nach Anspruch 3, **dadurch gekennzeichnet, dass** der Mittelabschnitt (9) in Schraubenform um die Gelenkachse (A) herumführt.

5. Schiebeverdeck nach Anspruch 1, **dadurch gekennzeichnet, dass** die Schenkelabschnitte (10) an ihren dem Quersteg (11) abgewandten Enden schwenkbeweglich mit dem jeweiligen Schlitten (3) verbunden sind.

6. Schiebeverdeck nach Anspruch 4, **dadurch gekennzeichnet, dass** in Richtung der Gelenkachse (A) die Länge des Mittelabschnitts (9) mehr als 2/3 der Länge der Querstege (11) beträgt.

7. Schiebeverdeck nach Anspruch 1, **dadurch gekennzeichnet, dass** sich das erste Federende (7A) des Federelements (6) gegen einen der Schenkelabschnitte (10) des ersten Hubbügels (4), und dass sich das zweite Federende (7B) des Federelements (6) gegen einen der Schenkelabschnitte (10) des zweiten Hubbügels (4) abstützt.

8. Schiebeverdeck nach -Anspruch 1, **dadurch gekennzeichnet, dass** die Schenkelabschnitte (10) gemeinsam mit dem Quersteg (11) jedes Hubbügels (4) aus einem mehrfach geknickten Metalldraht bestehen.

9. Schiebeverdeck nach Anspruch 1, **dadurch gekennzeichnet, dass** die Querstege (11) jeweils in einer Längsnut (13) des Verbindungselements (12) sitzen, wobei sich die beiden Längsnuten (13) auf einander abgewandten Umfangsabschnitten des Verbindungselements (12) befinden.

10. Schiebeverdeck nach Anspruch 1, **dadurch gekennzeichnet, dass** das Verbindungselement (12) im Wesentlichen als Kreiszylinder gestaltet ist.

11. Schiebeverdeck nach -Anspruch 1, **dadurch gekennzeichnet, dass** in Richtung der Gelenkachse (A) die Länge des Verbindungselements (12) mehr als 2/3 der Länge der Querstege (11) beträgt.

12. Schiebeverdeck nach -Anspruch 1, **dadurch gekennzeichnet, dass** der zwischen den Federenden (7A, 7B) angeordneter Mittelabschnitt (9) des Federelements (6) um das Verbindungselement (12) sowie die darin sitzenden Querstege (11) führt.

13. Schiebeverdeck nach Anspruch 12, **dadurch gekennzeichnet, dass** der Mittelabschnitt (9) in Schraubenform um das Verbindungselement (12) sowie die darin sitzenden Querstege (11) herumführt.

14. Schiebeverdeck nach einem der vorangehenden Ansprüche, **gekennzeichnet durch** eine durch die Querspiegel (2), die Schlitten (3) und die Hubbügel (4) gestützte Dachplane (14), welche an den Schlitten (3) und an den Federelementen (6) fixiert ist.

15. Schiebeverdeck nach Anspruch 14, **dadurch gekennzeichnet, dass** an der Dachplane (14) zu deren Fixierung an dem jeweiligen Federelement (6) eine Klammer (15) befestigt ist, die federelastisch auf das Federelement (6) aufgeclipst ist.

## Claims

1. Sliding cover for a roof opening of a commercial vehicle cargo area, having longitudinal guides (1) on both sides of the roof opening, having cross bows (2), which extend between the longitudinal guides and at their ends are each provided with a slide (3) that is mounted on the respective longitudinal guide (1) in a longitudinally displaceable manner, and having lifting frames (4) arranged in pairs between consecutive slides (3), wherein the two lifting frames (4) of each pair can be raised against one another and for this purpose at their one end are pivotably connected to the respective slide (3), and at their other end on the lift side are connected to one another in a hinge joint (5), wherein a spring element (6) with a first spring end (7A), exerting a downward force, supports itself on the lift-side end of the first lifting frame (4) of the pair and with a second spring end (7B), exerting a downward force, supports itself on the lift-side end of the second lifting frame (4) of the pair, **characterized in that** parts of each of the two lifting frames (4) are two leg portions (10) and a crosspiece (11), wherein the crosspiece (11) connects the leg portions (10) in the region of the hinge joint (5), and **in that** the crosspieces (11) of both lifting frames (4) sit jointly in a connecting element (12), which extends on the joint axis (A) .

2. Sliding cover according to Claim 1, **characterized in that** the spring ends (7A, 7B) are formed as hooks (8), which are hooked into the respective lifting frame (4).

3. Sliding cover according to Claim 1 or 2, **characterized in that** a middle portion (9) of the spring element (6) arranged between the spring ends (7A, 7B) extends about a joint axis (A) of the hinge joint (5).

4. Sliding cover according to Claim 3, **characterized in that** the middle portion (9) extends in screw-form about the joint axis (4).

5. Sliding cover according to Claim 1, **characterized in that** the leg portions (10), at their ends facing away from the crosspiece (11), are pivotably connected to the respective slide (3).

6. Sliding cover according to Claim 4, **characterized in that** in the direction of the joint axis (A), the length of the middle portion (9) amounts to more than 2/3 of the length of the crosspieces (11).

7. Sliding cover according to Claim 1, **characterized in that** the first spring end (7A) of the spring element (6) supports itself against one of the leg portions (10) of the first lifting frame (4), and **in that** the second spring end (7B) of the spring element (6) supports itself against one of the leg portions (10) of the second lifting frame (4).

8. Sliding cover according to Claim 1, **characterized in that** the leg portions (10), jointly with the crosspiece (11) of each lifting frame (4), consist of a multiply bent metal wire.

9. Sliding cover according to Claim 1, **characterized in that** the crosspieces (11) each sit in a longitudinal groove (13) of the connecting element (12), wherein the two longitudinal grooves (13) are located on circumferential portions of the connecting element (12) facing away from one another.

10. Sliding cover according to Claim 1, **characterized in that** the connecting element (12) is substantially configured as circular cylinder.

11. Sliding cover according to Claim 1, **characterized in that** in the direction of the joint axis (A), the length of the connecting element (12) amounts to more than 2/3 of the length of the crosspieces (11).

12. Sliding cover according to Claim 1, **characterized in that** the middle portion (9) of the spring element (6) arranged between the spring ends (7A, 7B) extends about the connecting element (12) and the crosspieces (11) sitting therein.

13. Sliding cover according to Claim 12, **characterized in that** the middle portion (9) extends in screw-form round about the connecting element (12) and the crosspieces (11) sitting therein.

14. Sliding cover according to any one of the preceding claims, **characterized by** a roof tarpaulin (14) supported by the cross bows (2), the slides (3) and the lifting frames (4), which is fixed to the slides (3) and to the spring elements (6).

15. Sliding cover according to Claim 14, **characterized in that** on the roof tarpaulin (14), for its fixing to the respective spring element (6), a clamp (15) is fastened, which is spring-elastically clipped to the spring element (6) .

## Revendications

1. Toit coulissant pour une ouverture de toit d'un espace de chargement de véhicule utilitaire, avec des guides longitudinaux (1) des deux côtés de l'ouverture de toit, avec des traverses (2) qui s'étendent entre les guides longitudinaux et qui sont pourvues à chacune de leurs extrémités d'un coulisseau (3) monté coulissant longitudinalement sur le guide longitudinal (1) correspondant, et avec des étriers de levage (4) disposés par paires entre des coulisseaux (3) successifs, les deux étriers de levage (4) de chaque paire étant aptes à être dressés l'un contre l'autre et étant, à cet effet, reliés à l'une de leurs extrémités au coulisseau (3) respectif de manière à être aptes à pivoter par rapport à celuici, et à leur autre extrémité, côté levage, par une liaison articulée (5), un élément (6) formant ressort s'appuyant par une première extrémité de ressort (7A), en exerçant une force dirigée vers le bas, sur l'extrémité côté levage du premier étrier de levage (4) de la paire, et par une deuxième extrémité de ressort (7B), en exerçant une force dirigée vers le bas, sur l'extrémité côté levage du deuxième étrier de levage (4) de la paire, **caractérisé, en ce que** les composants de chacun des deux étriers de levage (4) sont deux portions de branche (10) et une barrette transversale (11), la barrette transversale (11) reliant les portions de branche (10) dans la zone de la liaison articulée (5), et **en ce que** les barrettes transversales (11) des deux étriers de levage (4) sont placées ensemble dans un élément de liaison (12) qui s'étend sur l'axe d'articulation (A).

2. Toit coulissant selon la revendication 1, **caractérisé en ce que** les extrémités de ressort (7A, 7B) sont réalisées sous forme de crochets (8) qui sont accrochés dans l'étrier de levage (4) respectif.

3. Toit coulissant selon la revendication 1 ou 2, **caractérisé en ce qu'**une partie centrale (9) de l'élément (6) formant ressort, située entre les extrémités de ressort (7A, 7B), s'étend autour d'un axe d'articulation (A) de la liaison articulée (5).

4. Toit coulissant selon la revendication 3, **caractérisé en ce que** la partie centrale (9) s'étend autour de l'axe d'articulation (A) sous la forme d'une vis.

5. Toit coulissant selon la revendication 1, **caractérisé en ce que** les portions de branche (10) sont reliées au coulisseau (3) respectif de manière pivotante à leurs extrémités opposées à la barre transversale (11).

6. Toit coulissant selon la revendication 4, **caractérisé en ce que**, dans la direction de l'axe d'articulation (A), la longueur de la partie centrale (9) est supérieure aux 2/3 de la longueur des barrettes transversales (11).

7. Toit coulissant selon la revendication 1, **caractérisé en ce que** la première extrémité de ressort (7A) de l'élément (6) formant ressort s'appuie contre l'une des portions de branche (10) du premier étrier de levage (4), et **en ce que** la deuxième extrémité de ressort (7B) de l'élément (6) formant ressort s'appuie contre l'une des portions de branche (10) du deuxième étrier de levage (4).

8. Toit coulissant selon la revendication 1, **caractérisé en ce que** les portions de branche (10) sont constituées, conjointement avec la barrette transversale (11) de chaque étrier de levage (4), par un fil métallique plié plusieurs fois.

9. Toit coulissant selon la revendication 1, **caractérisé en ce que** les barrettes transversales (11) sont logées chacune dans une rainure longitudinale (13) de l'élément de liaison (12), les deux rainures longitudinales (13) se trouvant sur des parties périphériques opposées de l'élément de liaison (12).

10. Toit coulissant selon la revendication 1, **caractérisé en ce que** l'élément de liaison (12) est conçu essentiellement sous la forme d'un cylindre circulaire.

11. Toit coulissant selon la revendication 1, **caractérisé en ce que**, dans la direction de l'axe d'articulation (A), la longueur de l'élément de liaison (12) est supérieure aux 2/3 de la longueur des barrettes transversales (11).

12. Toit coulissant selon la revendication 1, **caractérisé en ce que** la partie centrale (9) de l'élément (6) formant ressort, disposée entre les extrémités de ressort (7A, 7B), s'étend autour de l'élément de liaison (12) ainsi que des barrettes transversales (11) qui y sont logées.

13. Toit coulissant selon la revendication 12, **caractérisé en ce que** la partie centrale (9) s'étend en forme de vis autour de l'élément de liaison (12) ainsi que des barrettes transversales (11) qui y sont logées.

14. Toit coulissant selon l'une des revendications précédentes, **caractérisé par** une bâche de toit (14) supportée par les transverses en miroir (2), les coulisseaux (3) et les étriers de levage (4) et qui est fixée aux coulisseaux (3) et aux éléments élastiques (6).

15. Toit coulissant selon la revendication 14, **caractérisé en ce qu'**une pince (15) est fixée à la bâche de toit (14) pour la fixer à l'élément de ressort respectif (6), laquelle pince est clipsée de manière élastique sur l'élément (6) formant ressort.
